# EUROPÄISCHE PATENTSCHRIFT

(11) **EP 2 380 473 B1**
(45) Veröffentlichungstag und Bekanntmachung des Hinweises auf die Patenterteilung: **20.11.2013**
(21) Anmeldenummer: 11157667.4
(22) Anmeldetag: 10.03.2011
(51) Int. Cl.: A47J 36/02, A47J 36/06, A47J 27/16, B65D 25/14, B65D 25/34

(54) **Farbiger GN-Speisenbehälter und -Deckel**
Coloured GN food container and lid
Récipient et couvercle de produits alimentaires gastronomes colorés

(30) Priorität: 11.03.2010 DE 202010000359 U
(43) Veröffentlichungstag der Anmeldung: 26.10.2011
(73) Patentinhaber: Maier, Max, 71636 Ludwigsburg (DE)
(72) Erfinder: Maier, Max, 71636 Ludwigsburg (DE)
(74) Vertreter: Schumacher & Willsau

(56) Entgegenhaltungen:
- EP-A1- 0 966 910
- EP-A2- 1 772 667
- DE-U1-202006 005 171
- DE-U1-202010 008 335
- GB-A- 2 431 339
- US-A- 4 777 931
- US-A1- 2002 076 565
- US-A1- 2005 081 416

## Beschreibung

Die Erfindung betrifft einen GN-Speisenbehälter aus einem Blech aus rostfreiem Stahl oder einem metallischen Mehrschichtmaterial und einen Deckel dafür.

Behälter, die im Küchen- oder Gastronomiebereich zur Aufnahme von Speisen, sei es zur Warmhaltung, sei es zur Zubereitung, eingesetzt werden, bestehen üblicherweise aus rostfreiem oder nichtrostendem Stahl. Das gilt insbesondere auch für GN-Speisenbehälter, die außer zum Transportieren hauptsächlich zum Warmhalten, Kühlhalten oder allgemein zum Aufbewahren von Speisen eingesetzt werden, insbesondere in Warm- bzw. Kaltspeisenausgaben. Einzelheiten zu solchen GN-Behältern und Warmausgaben finden sich beispielsweise in der EP 0 635 225 B1. Diese Druckschrift bezieht sich auf eine Warmspeisenausgabe, bei welcher die GN-Behälter zum Warmhalten, aber auch zum Zubereiten von Speisen eingesetzt werden. Die Wärmebeaufschlagung des GN-Behälters erfolgt in beiden Fällen durch von einer elektrischen Heizplatte ausgehende Wärmestrahlung, da GN-Behälter aus nichtrostendem Stahl üblicherweise nicht induktionsfähig, das heißt nicht durch eine Induktionsheizvorrichtung beheizbar sind. Ein üblicher GN-Speisenbehälter wird einfach durch Tiefziehen aus einem Blech aus rostfreiem Stahl hergestellt.

GN-Behälter aus metallischem Mehrschichtmaterial sind induktionsfähig, d. h. durch eine Induktionsheizvorrichtung beheizbar. Solche Behälter lassen sich heutzutage ebenfalls durch Tiefziehen aus einem Blech aus metallischem Mehrschichtmaterial herstellen. Solche Behälter, auch mit Deckel, sind z. B. aus den Dokumenten DE 20 2006 005 171 U1 und DE 10 2009 009 842 A1 bekannt.

Bei dem Einsatz von solchen GN-Speisenbehältern in der Gastronomie oder im Haushalt erweist es sich oft als problematisch, dass alle Behälter das gleiche Aussehen haben, eben weil sie alle aus rostfreiem Stahl oder alle aus einem metallischen Mehrschichtmaterial bestehen. Es ist bereits bekannt, GN-Speisenbehälter aus Polycarbonat für einen Temperaturbereich von -40°C bis +100°C herzustellen und diesen Speisenbehältern unterschiedliche Farben zu geben. Bei GN-Speisenbehältern aus rostfreiem Stahlblech oder aus einem Blech aus einem metallischen Mehrschichtmaterial ergibt sich häufig die Notwendigkeit, den Speisenbehälter äußerlich mit einem Hinweis auf seinen Inhalt zu kennzeichnen, insbesondere dann, wenn solche Speisenbehälter mit einem Deckel versehen werden, der üblicherweise ebenfalls aus rostfreiem Stahl oder aus einem metallischen Mehrschichtmaterial besteht. Solche Kennzeichnungen haben leider die Eigenschaft, dass sie im hektischen Betrieb in der Küche oder während des Transports verloren gehen. Die bekannten farbigen GN-Behälter, die vorstehend erwähnt sind, können zwar anhand ihrer Farbe voneinander unterschieden werden, so dass es sich unter bestimmten Umständen erübrigen kann, sie zusätzlich noch mit einem Hinweis auf den Inhalt zu versehen, sie sind jedoch nur für Temperaturen bis zu +100°C einsetzbar. Es sind zwar bereits auch farbige GN-Speisenbehälter bekannt geworden, die aus Porzellan bestehen, im rauen Kücheneinsatz kann Porzellan jedoch das strapazierfähige Blech aus rostfreiem Stahl nicht ersetzen.

Deckel für GN-Speisenbehälter werden bislang lediglich aus rostfreiem Stahl, aus einem metallischen Mehrschichtmaterial oder aus transparentem Kunststoff hergestellt.

In dem Dokument WO 2005/0 66 388 A2 ist zwar erwähnt, dass eine auf eine metallische Oberfläche aufgetragene glasartige Schicht, die in der Regel transparent und farblos ist, eine weitere (glasartige) Schicht tragen kann, z.B. eine funktionelle glasartige Schicht. Beispiele dafür sollen sich in dem Dokument EP-A-729 442 oder in dem Dokument DE-A-19645043 finden. Es soll sich bei dieser funktionellen glasartigen Schicht um eine farbige Schicht handeln können.

Weder den beiden erstgenannten Dokumenten noch den beiden letztgenannten Dokumenten ist jedoch zu entnehmen, dass eine solche funktionelle farbige Schicht zu Kennzeichnungszwecken bei einem GN-Behälter eingesetzt wird.

Aus dem Dokument GB-A-2 431 339 ist ein Speisenbehälter bekannt, der kein GN-Speisenbehälter ist. Dieser bekannte Speisenbehälter hat eine außen vorstehende Lippe oder einen Griff. Daran ist die schriftliche Markierung "vegetarisch" angebracht. Dieses Wort könnte auch durch eine Farbe ersetzt werden, zum Beispiel durch grün, um Behälter für vegetarische Lebensmittel zu kennzeichnen.

Aus Dokument US-A-2005/081416 ist ein Speisenbehälter bekannt, bei dem es sich ebenfalls nicht um einen GN-Speisenbehälter handelt. Außen an dem Behälter ist eine Halterung angebracht, in die Anzeigechips eingeführt werden können, an denen zu erkennen ist, was in dem Behälter enthalten ist.

Das Dokument DE 10 2005 047 500 A1 betrifft ein Kunststoffbauteil mit einem Sichtteil und mit einer unter der Oberfläche des Sichtteils angeordneten Lichtquelle, die ein oder mehrere Leuchtelemente umfasst, wobei der Sichtteil im Wesentlichen opak gegenüber dem Tageslicht und transparent oder translucent gegenüber dem von den Leuchtelementen ausgestrahltem Licht ausgebildet ist. Mit der Kennzeichnung eines GN-Speisenbehälters befasst sich dieses Dokument offenbar nicht.

Aufgabe der Erfindung ist es, einen GN-Behälter aus rostfreiem Stahl oder aus einem metallischen Mehrschichtmaterial zu schaffen, bei dem sich die oben dargelegten Kennzeichnungsprobleme nicht stellen.

Außerdem soll ein Deckel für einen GN-Speisenbehälter, insbesondere einen GN-Speisenbehälter aus rostfreiem Stahl oder aus einem metallischen Mehrschichtmaterial, geschaffen werden.

Diese Aufgabe ist erfindungsgemäß durch einen GN-Speisenbehälter aus rostfreiem Stahl oder einem metallischen Mehrschichtmaterial gelöst, für den zu Kennzeichnungszwecken ein Farbcode gewählt ist, welcher eine zumindest außen auf die Oberfläche des Bleches aufgebrachte transparente farbige Beschichtung umfasst.

Erfindungsgemäß ist für den Deckel für einen GN-Speisenbehälter, insbesondere einen GN-Speisenbehälter aus rostfreiem Stahl oder aus einem metallischen Mehrschichtmaterial, dessen Oberfläche unbeschichtet ist oder zumindest außen mit einer farbigen Beschichtung versehen ist, zu Kennzeichnungszwecken ein Farbcode gewählt, welcher eine zumindest außen auf seine Oberfläche aufgebrachte transparente farbige Beschichtung umfasst.

Der GN-Speisenbehälter nach der Erfindung vereinigt in sich die Vorteile eines Speisenbehälters aus rostfreiem Stahl oder einem metallischen Mehrschichtmaterial und eines farbigen Speisenbehälters, so dass sowohl die Kennzeichnungsprobleme der bekannten GN-Speisenbehälter aus rostfreiem Stahl oder einem metallischen Mehrschichtmaterial als auch das Problem der begrenzten Temperatur, bis zu welcher der Speisenbehälter maximal einsetzbar ist, beseitigt sind.

Die Transparenz der Beschichtung des aus rostfreiem Stahl oder einem metallischen Mehrschichtmaterial bestehenden GN-Speisenbehälters und -Deckels nach der Erfindung bietet den Vorteil, dass trotz der farbigen Beschichtung weiterhin ersichtlich ist, dass der GN-Behälter und der GN-Deckel aus rostfreiem Stahl oder einem metallischen Mehrschichtmaterial bestehen. Der Koch weiß dadurch unmittelbar, dass der Behälter und der Deckel ohne Rücksicht auf die in der Küche auftretenden Temperaturen eingesetzt werden können. Vorteilhafte Ausgestaltungen des GN-Speisenbehälters und -Deckels nach der Erfindung bilden die Gegenstände der abhängigen Ansprüche.

In einer Ausgestaltung sind der aus einem Blech aus rostfreiem Stahl oder einem metallischen Mehrschichtmaterial bestehende GN-Speisenbehälter und - Deckel nach der Erfindung außen und innen auf der Oberfläche des Bleches mit einer farbigen Beschichtung versehen. Das trägt zu einer noch leichteren Unterscheidung von GN-Behältern und GN-Deckeln aus rostfreiem Stahl oder einem metallischen Mehrschichtmaterial bei.

In einer weiteren Ausgestaltung des aus rostfreiem Stahl oder einem metallischen Mehrschichtmaterial bestehenden GN-Speisenbehälters und -Deckels nach der Erfindung ist die Beschichtung aus einem lebensmittelechten Farblack gebildet. Der GN-Behälter und der Deckel lassen sich so auf einfache Weise farbig ausgestalten.

Die farbige Beschichtung besteht vorzugsweise aus einem Farblack, der nicht nur lebensmittelecht ist, sondern auch einer wesentlich höheren Temperatur als Polycarbonat ausgesetzt werden kann, also einer Temperatur, die weit über +100°C liegen kann.

Die Farben des GN-Speisenbehälters und des Deckels nach der Erfindung dienen als ein Farbcode für den Inhalt oder als ein Hinweis auf den Hersteller des Behälters oder auf den Hersteller des Behälterinhalts.

Ausführungsbeispiele der Erfindung werden im Folgenden unter Bezugnahme auf die beigefügten Zeichnungen näher beschrieben. Es zeigen:
- Fig. 1: in einer perspektivischen Ansicht einen GN-Speisenbehälter nach der Erfindung,
- Fig. 2: eine Querschnittansicht der Wand des GN-Speisenbehälters nach Fig. 1 und eines GN-Deckels nach Fig. 4 an einer beliebigen Stelle desselben,
- Fig. 3: in perspektivischer Darstellung einen nicht erfindungsgemäßen GN-Flachdeckel aus durchsichtigem Kunststoff und
- Fig. 4: als ein Ausführungsbeispiel eines erfindungsgemäßen Deckels einen GN-Steckdeckel aus rostfreiem Stahl oder metallischem Mehrschichtmaterial.

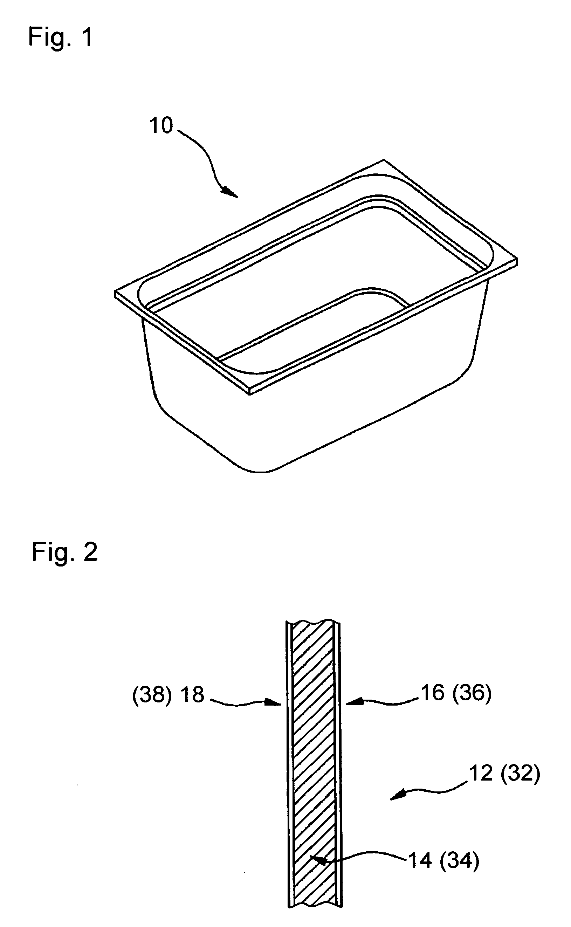

Fig. 1 zeigt einen insgesamt mit 10 bezeichneten GN-Speisenbehälter nach der Erfindung, dessen Wand 12 aus rostfreiem oder nichtrostendem Stahlblech oder aus einem Blech aus einem metallischen Mehrschichtmaterial hergestellt ist. Gemäß der Darstellung in Fig. 2 ist das Blech, das mit 14 bezeichnet ist, innen und außen, also auf der Innenseite und auf der Außenseite des Behälters 10 mit einer farbigen Beschichtung 16 bzw. 18 versehen. Der Behälter 10 entspricht, abgesehen von der inneren und äußeren Beschichtung 16 bzw. 18, DIN 66075 oder EN 631. Die farbige Beschichtung 16, 18 ist aus einem lebensmittelechten Farblack gebildet. Lebensmittelecht soll hier bedeuten, dass der Farblack durch die in den Behälter 10 eingebrachten oder in dem Behälter 10 zubereiteten Speisen nicht angegriffen wird. Die farbige Beschichtung 16, 18 ist transparent. Bevorzugt ist die farbige Beschichtung 16, 18 auch hochtemperaturfest ausgebildet.

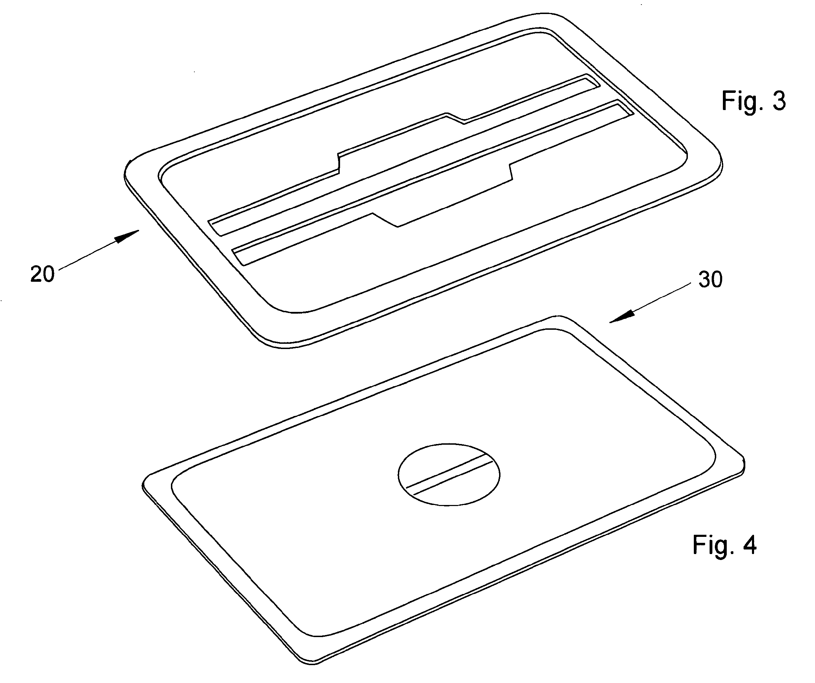

Fig. 3 zeigt einen nicht erfindungsgemäßen GN-Deckel 20 für den GN-Speisenbehälter 10 nach den Fig. 1 und 2. Der Deckel 20 besteht allgemein aus einem Kunststoff und in dem hier dargestellten Ausführungsbeispiel aus Polycarbonat. Der Deckel 20 ist farbig ausgebildet. Für die farbige Ausbildung des Deckels 20, die z. B. durch entsprechendes Einfärben oder Pigmentieren des Kunststoffes erzielbar ist, kann ein Farbcode verwendet werden, welcher einem für den GN-Speisenbehälter 10 gewählten Farbcode entspricht, wie eingangs erläutert.

Fig. 4 zeigt als ein Ausführungsbeispiel eines Deckels nach der Erfindung einen GN-Deckel 30 aus einem Blech 34 aus rostfreiem Stahl oder einem metallischen Mehrschichtmaterial. Der Aufbau der Wand 32 des Deckels 30 ist in Fig. 2 gezeigt, in der die sich auf Fig. 4 beziehenden Bezugszahlen jeweils in Klammern gesetzt sind. Der Deckel 30 ist als ein stapelbarer Steckdeckel ausgebildet, könnte aber auch ein Gardeckel, ein Flachdeckel, ein Präsentationsdeckel oder irgendein anderer Deckel sein. Wesentlich ist, dass er ebenfalls im GN-Format ausgebildet und mit einer transparenten farbigen Beschichtung versehen ist. Die Wand 34 des Deckels 30 hat den gleichen Aufbau wie die in Fig. 2 gezeigte Wand 14 des GN-Behälters 10. Für die farbige Ausbildung trägt der Deckel 30 auf seiner Oberfläche die transparente farbige Beschichtung, die in Fig. 2 innen mit 36 und außen mit 38 bezeichnet ist und in jeder Hinsicht der Beschichtung 16, 18 des Behälters 10 entsprechen kann. Auch die Beschichtung 36, 38 ist aus einem lebensmittelechten Farblack gebildet.

### Bezugszeichen liste

- 10: GN-Speisenbehälter
- 12: Wand
- 14: Blech aus rostfreiem Stahl oder metallischem Mehrschichtmaterial
- 16: farbige Beschichtung
- 18: farbige Beschichtung
- 20: GN-Deckel
- 30: GN-Deckel
- 32: Wand
- 34: Blech aus rostfreiem Stahl oder metallischem Mehrschichtmaterial
- 36: farbige Beschichtung
- 38: farbige Beschichtung

## Patentansprüche

1. GN-Speisenbehälter (10) aus einem Blech (14) aus rostfreiem Stahl oder einem metallischen Mehrschichtmaterial,
**dadurch gekennzeichnet, dass** zu Kennzeichnungszwecken für den Behälter (10) ein Farbcode gewählt ist, welcher eine zumindest außen auf die Oberfläche des Bleches (14) aufgebrachte transparente farbige Beschichtung (18) umfasst.

2. GN-Speisenbehälter nach Anspruch 1, **dadurch gekennzeichnet, dass** der Behälter (10) außen und innen auf der Oberfläche des Bleches (14) mit einer transparenten farbigen Beschichtung (16, 18) versehen ist.

3. GN-Speisenbehälter nach Anspruch 1 oder 2, **dadurch gekennzeichnet, dass** die Beschichtung (16, 18) aus einem lebensmittelechten Farblack gebildet ist.

4. Deckel (30) für einen GN-Speisenbehälter (10), insbesondere einen GN-Speisenbehälter (10) nach einem der Ansprüche 1 bis 3,
**dadurch gekennzeichnet, dass** der Deckel (30) aus einem Blech (34) aus rostfreiem Stahl oder einem metallischen Mehrschichtmaterial besteht und dass zu Kennzeichnungszwecken für den Deckel (30) ein Farbcode gewählt ist, welcher eine zumindest außen auf seine Oberfläche aufgebrachte transparente farbige Beschichtung (38) umfasst.

5. Deckel nach Anspruch 4, **dadurch gekennzeichnet, dass** der Deckel (30) außen und innen auf seiner Oberfläche mit einer transparenten farbigen Beschichtung (36, 38) versehen ist.

6. Deckel nach Anspruch 4 oder 5, **dadurch gekennzeichnet, dass** die Beschichtung (36, 38) aus einem lebensmittelechten Farblack gebildet ist.

## Claims

1. A GN catering container (10) made of of a sheet (14) of stainless steel or of a metal multi-layer material,
**characterized in that** a color code is selected for the container (10) for identification purposes, the color code comprising a transparent color coating (18) applied at least on the outer surface of the sheet (14).

2. The GN catering container of claim 1, **characterized in that** the container (10) is furnished with a transparent color coating (16, 18) on the outer and on the inner surface of the sheet (14).

3. The GN catering container of claim 1 or 2, **characterized in that** the coating (16, 18) is formed of a food-safe color paint.

4. A cover (30) for a GN catering container (10), notably a GN catering container (10) as set forth in one of claims 1 to 3,
**characterized in that** the cover (30) consists of a sheet (34) of stainless steel or of a metal multi-layer material and **in that** a color code is selected for the cover (30) for identification purposes, the color code comprising a transparent color coating (38) applied at least on its outer surface.

5. The cover of claim 4, **characterized in that** the cover (30) is furnished with a transparent color coating (36, 38) on its outer and on its inner surface.

6. The cover of claim 4 or 5, **characterized in that** the coating (36, 38) is formed of a food-safe color paint.

## Revendications

1. Bac GN pour la cuisine et le transport de nourriture (10) fait d'une tôle (14) d'acier inoxydable ou d'un matériau métallique multicouche,
**caractérisé en ce qu'**un code couleur est choisi pour le bac (10) pour des fins de marquage, le code couleur comportant un revêtement coloré transparent appliqué au moins à l'extérieur sur la surface de la tôle (14).

2. Bac GN selon la revendication 1, **caractérisé en ce que** le bac (10) est pourvu d'un revêtement (16, 18) coloré transparent à l'extérieur et à l'intérieur sur la surface de la tôle (14).

3. Bac GN selon la revendication 1 ou 2, **caractérisé en ce que** le revêtement (16, 18) est formé d'une peinture colorée qui convient aux aliments.

4. Couvercle (30) pour un bac GN (10) pour la cuisine et le transport de nourriture, notamment un bac GN (10) selon l'une des revendications 1 à 3,
**caractérisé en ce que** le couvercle (30) consiste d'une tôle (34) d'acier inoxydable ou d'un matériau multicouche métallique et **en ce qu'**un code couleur est choisi pour le couvercle (30) pour des fins de marquage, le code couleur comportant un revêtement coloré transparent (38) appliqué au moins à l'extérieur sur sa surface.

5. Couvercle selon la revendication 4, **caractérisé en ce que** le couvercle (30) est pourvu d'un revêtement coloré transparent (36, 38) à l'extérieur et à l'intérieur sur sa surface.

6. Couvercle selon la revendication 4 ou 5, **caractérisé en ce que** le revêtement (36, 38) est formé d'une peinture colorée qui convient aux aliments.
